# EUROPEAN PATENT SPECIFICATION

(11) **EP 4 303 173 B1**
(45) Date of publication and mention of the grant of the patent: **16.04.2025**
(21) Application number: 23203799.4
(22) Date of filing: 11.12.2019
(51) Int. Cl.: C12C 13/10, B65D 25/20, B65D 47/06, B65D 63/10, B65D 77/04, B65D 77/06, B65D 77/22, B65D 85/72, B67D 1/04, B67D 1/02

(54) **FERMENTATION CONTAINER AND BEVERAGE MAKER HAVING FERMENTATION CONTAINER**
FERMENTATIONSBEHÄLTER UND GETRÄNKEBEREITER MIT FERMENTATIONSBEHÄLTER
RÉCIPIENT DE FERMENTATION ET PRÉPARATEUR DE BOISSONS DOTÉ D'UN RÉCIPIENT DE FERMENTATION

(30) Priority: 11.12.2018 KR 20180159387
(43) Date of publication of application: 10.01.2024
(62) Divisional of application: 19215111.6
(73) Proprietor: LG Electronics Inc., Yeongdeungpo-gu Seoul 07336 (KR)
(72) Inventor: Lee, Daewoong, 08592 Seoul (KR); Hong, Jinpyo, 08592 Seoul (KR); Lee, Kyungbin, 08592 Seoul (KR)
(74) Representative: Ter Meer Steinmeister & Partner

(56) References cited:
- WO-A2-2018/216958
- US-A1- 2018 016 530

## Description

The present application claims priority to Korean Patent Application No. 10-2018-0159387, filed in Korea on December 11, 2018.

### BACKGROUND

### Field

A fermentation container for a beverage maker and a beverage maker having the same fermentation container, and more particularly, a fermentation container in which a fermentation material is accommodated, and a beverage maker including the fermentation container are disclosed herein.

### Background

A beverage is a general term for a drinkable liquid, such as an alcoholic drink or tea, for example. For example, beverages may be classified into various categories, such as water (drink) for quenching thirst, a fruit juice having a unique aroma and flavor, a cooling beverage providing a refreshing feeling, a favorite beverage capable of providing a stimulant effect, or an alcoholic beverage having an alcoholic effect.

A representative example of theses beverages is beer. Beer is an alcoholic drink produced by making and filtering juice from malt, which is made by sprouting barley, and then adding hops and fermenting it.

Customers can purchase ready-made products made and sold by beer manufacturers or may make beer at home (hereinafter "homemade beer") made by fermenting the materials of beer at home or in a bar. Homemade beer may be produced in a variety of types and may be produced to fit the tastes of customers, in comparison with ready-made products.

Water, malt, hops, yeast, and a flavor additive, for example, may be the materials of beer. Yeast may ferment the malt when it is added to the malt, and may help to produce alcohol and carbonic acid. A flavor additive may be an additive substance that enhances the flavor of beer, such as fruit, syrup, and vanilla beans, for example.

In general, the process of making homemade beer may include a total of three steps or operations, a step or operation of making a malt juice, a fermentation step or operation, and an aging step or operation, and two to three weeks may be taken from the making of a malt juice to the aging step.

Maintaining an optimal temperature in the fermentation operation is important for homemade beer, and the simpler the homemade beer is to make, the greater the user convenience. Recently, beverage makers that make it possible to easily make homemade beer at home or in a bar are increasing being used, and for those beverage makers to safely and simply make beer. Such beverage makers for brewing beers at home are for instance disclosed in WO2018/216958 and US2018/016530.

### SUMMARY

One or more of the above objectives and/or any other objective is achieved by the subject-matter of the independent claim(s).

In an aspect of the present technique, a fermentation container is provided. The fermentation container may include a main body; a bonding portion spaced in a downward direction apart from a bottom surface of the main body; a connecting portion configured to connect the bonding portion and the main body; a flexible container including a thermal bonding portion thermally bonded to a top surface of the bonding portion, and a container portion connected to the thermal bonding portion and forming a fermentation space under the bonding portion; and a pressing member comprising an elastic material and configured to press the thermal bonding portion to the bonding portion by being fitted between the main body and the thermal bonding portion.

It may be noted that instead of being thermally bonded the bonding portion and the thermal bonding portion may be adhered together by other techniques such as adhesive, mechanical means such as screws or rivets, and like.

A seating portion configured to be seated on a fermenter may be formed at an edge of the main body. The seating portion may be spaced apart from the pressing member.

A distance from a virtual central axis of the main body to the seating portion may be larger than a distance from the virtual central axis of the main body to an outer circumference of the pressing member.

A top surface of the pressing member may be in contact with a bottom surface of the main body.

A bottom surface of the pressing member may be in contact with a top surface of the thermal bonding portion.

The connecting portion may have a hollow cylindrical shape. The connecting portion may be connected by being fitted on an outer circumference of a recession recessed downward from the main body.

The bonding portion may extend radially outward from a lower end of the connecting portion.

The pressing member may have a cylindrical ring shape surrounding an outer circumference of the connecting portion.

A locking protrusion may be formed at a first end of the pressing member. A fitting portion in which the locking protrusion is fitted may be formed at a second end of the pressing member.

A distance from a virtual central axis of the connecting portion to an outer circumference of the pressing member may be equal to or larger than a distance from the virtual central axis of the connecting portion to an outer circumference of the bonding portion.

When the container portion expands, a portion of an outer surface of the container portion may be configured to come in contact with a bottom surface of the pressing member.

In another aspect of the present technique, a beverage maker including the fermentation container is provided. The fermentation container may be according to the above-described aspect of the present technique.

In yet another aspect of the present technique, a beverage maker is provided. The beverage maker may include: a fermenter having an opening; a fermentation lid configured to open and close the opening; and a fermentation container inserted into the fermenter through the opening. The fermenter may be a rigid body such as a metallic case. The fermenter may be non-deformable. The fermentation container may be according to any one of the above-described embodiments.

The fermentation container may include: a container body; a flexible container including a thermal bonding portion thermally bonded to the container body, and a container portion connected to the thermal bonding portion and forming a fermentation space; and a pressing member mounted on the container body, comprising an elastic material, and configured to press the thermal bonding portion. The fermentation container may be according to any one of the above-described embodiments.

The container body may include a main body having a seating portion. The seating portion may be formed at an edge thereof and may be seated on the fermenter.

The container body may include a bonding portion that is spaced downward apart from a bottom surface of the main body and to which the thermal bonding portion may be thermally bonded. The pressing portion may be configured to press the thermal bonding portion to the bonding portion by being fitted between the main body and the thermal bonding portion.

A distance from a virtual central axis of the container body to an outer circumference of the pressing member may be equal to or larger than a distance from the virtual central axis of the container body to an outer circumference of the bonding portion; and/or a distance from a virtual central axis of the container body to an outer circumference of the pressing member may be smaller than a distance from the virtual central axis of the container body to the seating portion.

### BRIEF DESCRIPTION OF THE DRAWINGS

Embodiments will be described in detail with reference to the following drawings in which like reference numerals refer to like elements, and wherein:
FIG. 1 is a schematic view of a beverage maker according to an embodiment;
FIG. 2 is a cross-sectional view of a fermentation container according to an embodiment;
FIG. 3 is a plan view of the fermentation container shown in FIG. 2;
FIG. 4 is a horizontal cross-sectional view of a pressing member according to an embodiment;
FIG. 5 is a perspective view of the fermentation module according to an embodiment;
FIG. 6 is a perspective view when a fermentation lid of the fermentation module shown in FIG. 5 is open;
FIG. 7 is an exploded perspective view of the fermentation module according to an embodiment;
FIG. 8 is a cross-sectional view showing an inside of the fermentation module according to an embodiment; and
FIG. 9 is a cross-sectional view when the fermentation lid of the fermentation module shown in FIG. 8 is open.

### DETAILED DESCRIPTION

Hereinafter, embodiments are described with reference to drawings. Wherever possible, like or the same reference numerals have been used to indicate like or the same elements, and repetitive disclosure has been omitted.

Although beer is exemplified as a beverage that is made using a beverage maker according to embodiments, the kind of beverage that can be made using the beverage maker is not limited to beer and various kinds of beverages may be made using the beverage maker according to embodiments.

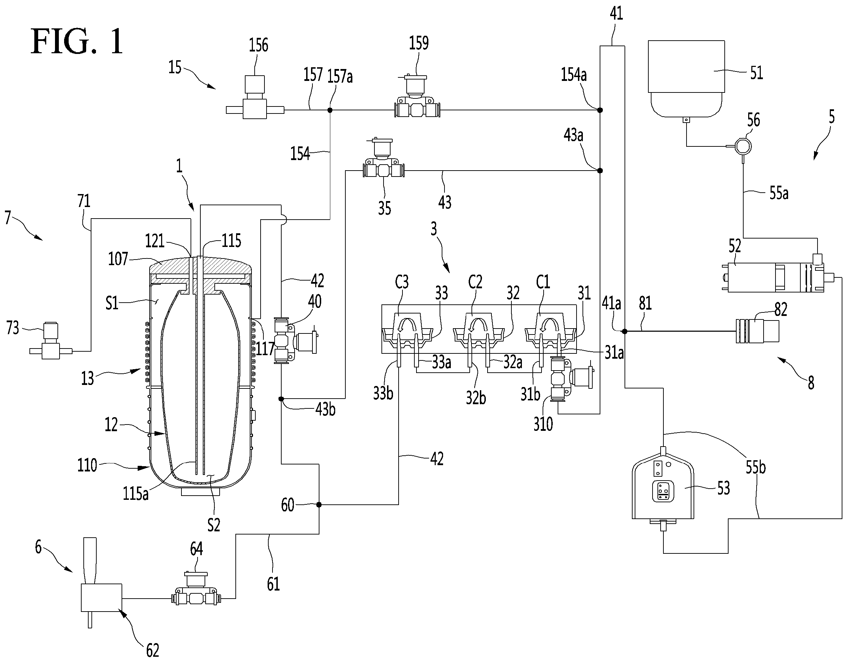

FIG. 1 is a view of a beverage maker according to an embodiment. The beverage maker may include a fermentation module 1. Fermentation of a beverage may proceed in the fermentation module 1.

The beverage maker may include a fluid supply module 5. The fluid supply module 5 may supply a fluid, such as water.

The beverage maker may include a materials feeder 3 having material receivers 31, 32, and 33 in which materials for making a beverage may be accommodated. The beverage maker may include first and second main channels 41 and 42 that connect the fluid supply module 5 and the fermentation module 1.

The beverage maker may include a beverage dispenser 6 that dispenses the beverage made in the fermentation module 1. The beverage dispenser 6 may be connected to the second main channel 42, whereby the beverage taken out of the fermentation module 1 may be guided to the beverage dispenser 6 through a portion of the second main channel 42.

The beverage maker may further include a gas discharger 7. The gas discharger 7 may be connected to the fermentation module 1, thereby being able to discharge gas produced in the process of making a beverage.

The beverage maker may further include an air injector 8 that injects air. The air injector 8 may be connected to the fluid supply module 5 or the first main channel 41. The air injector may include an air pump 82.

The beverage maker may further include an air adjuster 15 that adjusts pressure between an inner wall of a fermenter 110 and an outer side of a fermentation container 12.

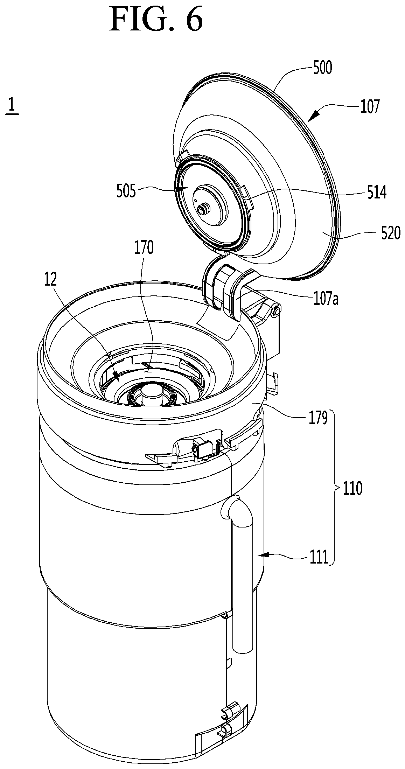

The fermentation module 1 may include the fermenter 110 having an opening 170 (see FIG. 6) and a fermentation lid 107 that opens/closes the opening 170. An internal space S1 in which the fermentation container 12 may be accommodated may be formed in the fermenter 110. That is, the fermentation container 12 may be accommodated in the fermenter 110.

The fermentation container 12 may be a container that is separately provided to prevent beverage materials and a completed beverage from sticking to the inner wall of the fermenter 110. The fermentation container 12 may be detachable from the fermenter 110. The fermentation container 12 may be seated in the fermenter 110 and may ferment a beverage in the fermenter 110, and when it finishes being used, it may be taken out of the fermenter 110.

The fermentation container 12 is a pack in which materials for making a beverage are accommodated. The fermentation container 12 may be made of a flexible material, so it may be easily inserted into the fermenter 110 and contract and expand, depending on pressure. However, the fermentation container 12 may include a polyethylene terephthalate (PET) material, for example.

A fermentation space S2 in which beverage materials are accommodated and a beverage made is formed in the fermentation container 12. The fermentation container 12 may be smaller than the internal space S1 of the fermenter 110.

The fermentation container 12 may be inserted into and accommodated with materials accommodated therein in the fermenter 110 through the opening 170 (see FIG. 6). The fermentation container 12 may be inserted into the fermenter 110 and accommodated in the fermenter 110 with the fermentation lid 107 open.

The fermentation lid 107 may close tightly the fermenter 110 after the fermentation container 12 is inserted into the fermenter 110. The fermentation container 12 may help fermentation of materials in a state in which it is accommodated in the internal space S1 closed tightly by the fermenter 110 and the fermentation lid 107. The fermentation container 12 may be expanded by internal pressure thereof while a beverage is made. When the beverage in the fermentation container 12 is taken out and air is supplied between an inner side of the fermenter 110 and an outer side of the fermentation container 12, the fermentation container 12 may be compressed by the air in the fermenter 110.

The fermentation lid 107, which closes tightly an inside of the fermenter 110, may be disposed over the fermenter 110 and may close the opening 170. The fermentation lid 107 may have a main channel connecting portion 115 connected with the main channel, more particularly, the second main channel 42. The main channel connecting portion 115 may communicate with the fermentation space S2 of the fermentation container 12.

A tube 115a elongated in a vertical direction and communicating with the main channel connecting portion 115 may be provided in the fermentation container 12. A lower end of the tube 115a may be adjacent to a floor of the fermentation container 12, and when a beverage is taken out, the beverage in the fermentation container 12 may be easily suctioned into the tube 115a.

The fermenter 110 may be provided with a temperature adjuster 13. The temperature adjuster 13 may change an internal temperature of the fermenter 110. The temperature adjuster 13, which heats or cools the fermenter 110, may adjust the temperature of the fermenter 110 to an optimal temperature for beverage fermentation.

The temperature adjuster 13 may include at least one of a refrigeration cycle apparatus or a heater. However, the temperature adjuster 13 is not limited thereto and may include a thermoelectric element (TEM), for example.

For example, a refrigeration cycle apparatus of the temperature adjuster 13 may adjust the temperature of the fermenter 110 by cooling the fermenter 110. The refrigeration cycle apparatus may include, for example, a compressor, a condenser, and expansion device, and an evaporator. The evaporator may be disposed in contact with an outer side of the fermenter 110. The evaporator may be configured as an evaporation tube wound on the outer side of the fermenter 110.

The main channels 41 and 42 may include first channel 41, which may connect the fluid supply module 5 and the material feeder 3, and second main channel 42, which may connect the material feeder 3 and the fermentation module 1. That is, the first main channel 41 may guide a fluid, such as water supplied from the fluid supply module 5 to the material feeder 3 and the second main channel 42 may guide a mixture of materials from the material feeder 3 and the fluid to the fermentation module 1. A first end 41a of the first main channel 41 may be connected to the fluid supply module 5 and a second end thereof may be connected to the material feeder 3.

A material supply valve 310 that opens/closes the first main channel 41 may be disposed in the first main channel 41. The material supply valve 310 may be a component included in the material feeder 3.

The material supply valve 310 may be opened when additives accommodated in material receivers 31, 32, and 33 are to be put in, thereby opening the first main channel 41.

A first end of the second main channel 42 may be connected with the main channel connecting portion 115 of the fermentation module 1 and a second end thereof may be connected to the material feeder 3. A main valve 40 that opens/closes the second main channel 42 may be disposed in the second main channel 42.

The main valve 40 opens when fluid is supplied, air is injected, or an additive is supplied into the fermentation container 12, thereby opening the second main channel 42. The main valve 40 closes when the fermenter 110 is cooled, fermentation proceeds in the fermentation container 12, or a beverage is aged and kept in the fermentation container 12, thereby closing the second main channel 42 and closing tightly the fermentation container 12. The main valve 40 may open the second main channel 42 by opening when a beverage is dispensed by the beverage dispenser 6, and the beverage in the fermentation container 12 may be moved to the beverage dispenser 6 through the main valve 40.

The main channels 41 and 42 may be configured as one continuous channel when the beverage maker does not include the material feeder 3. When the beverage maker includes the material feeder 3, the beverage maker may further include the bypass channel 43 configured such that fluid or air bypasses the material receivers 31, 32, and 33.

The bypass channel 43 may connect the first main channel 41 and the second main channel 42 while bypassing the material receivers 31, 32, and 33. A first end 43a of the bypass channel 43 may be connected to the first main channel 41 and a second end 43b thereof may be connected to the second main channel 42. The first end 43a of the bypass channel 43 may be connected to a portion between the fluid supply module 3 and the material supply valve 310 in the first main channel 41, and the second end 43b may be connected to a portion between the main valve 40 and the material feeder 3 in the second main channel 42.

A bypass valve 35 that opens/closes the bypass channel 43 may be disposed in the bypass channel 43. The bypass valve 35 may open when fluid supplied from the fluid supply module 5 or air injected from the air injector 8 is supplied into the fermentation container 12, thereby opening the bypass channel 43.

When beer is made using the beverage maker, the materials for making beer may include water, malt, yeast, hops, and/or a flavor additive, for example. The beverage maker may include both of the material feeder 3 and the fermentation container 12, and the materials for making a beverage may be separately accommodated in the material feeder 3 and the fermentation container 12. Some of the materials for making a beverage may be accommodated in the fermentation container 12 and other materials may be accommodated in the material feeder 3. The materials accommodated in the material feeder 3 may be supplied into the fermentation container 12 together with a fluid, such as water supplied from the fluid supply module 5 and may be mixed with materials accommodated in the fermentation container 12.

A main material necessary for making a beverage may be accommodated in the fermentation container 12 and additives added to the main materials may be accommodated in the material feeder 3. The additives accommodated in the material feeder 3 may be mixed with the fluid, such as water supplied from the fluid supply module 5 and supplied into the fermentation container 12 together, and may be mixed with the main material accommodated in the fermentation container 12.

The main material accommodated in the fermentation container 12 may include a material which is larger in content than other materials. For example, when beer is made, the main material may be malt of malt, yeast, hops, and a flavor additive. Further, the additives accommodated in the material feeder 3 may be other materials except for the malt, for example, yeast, hops, and a flavor additive.

The beverage maker may include the fermentation container 12 without including the material feeder 3. In this case, the main material may be accommodated in the fermentation container 12 and a user may directly put additives into the fermentation container 12.

When the beverage maker includes both of the material feeder 3 and the fermentation container 12, it is possible to more simply make a beverage, and hereinafter, an example including both of the material feeder 3 and the fermentation container 12 is described for convenience. However, it should be noted that embodiments are not limited to the case that includes both of the material feeder 3 and the fermentation container 12.

The materials in the fermentation container 12 may ferment, as time passes, and a finished beverage made in the fermentation container 12 may flow into the second main channel 42 through the main channel connecting portion 115 and may be dispensed by flowing to the beverage dispenser 6 from the second main channel 42.

Materials for making a beverage may be accommodated in the material feeder 3, and the material feeder 3 may be configured to pass fluid, such as water supplied from the fluid supply module 5. For example, when the beverage to be made in the beverage maker is beer, the materials that are accommodated in the material feeder 3 may be yeast, hops, and a flavor additive, for example.

The materials accommodated in the material feeder 3 may be directly accommodated in the material receivers 31, 32, and 33 formed in the material feeder 3. At least one material receiver 31, 32, and 33 may be formed in the material feeder 3. A plurality of material receivers 31, 32, and 33 may be formed in the material feeder 3, and in this case, the plurality of material receivers 31, 32, and 33 may be separated from each other.

Inlets 31a, 32a, and 33a through which fluid flows in and outlets 31b, 32b, and 33b through which fluid flows may be formed at the material receivers 31, 32, and 33, respectively. Fluid flowing into the inlet of one material receiver may be mixed with the materials in the material receiver and then may be discharged to the outlet.

The materials accommodated in the material feeder 3 may be accommodated in material containers C1, C2, and C3. The material containers C1, C2, and C3 may be accommodated in the material receivers 31, 32, and 33, and the material receivers 31, 32, and 33 may be referred to as "material container mounts". The material containers C1, C2, and C3 may be configured as capsules or pods; however, embodiments are not limited thereto.

When materials are accommodated in the material containers C1, C2, and C3, the material feeder 3 may be configured such that the material containers C1, C2, and C3 may be seated therein and removed therefrom. Further, the material feeder 3 may be configured as a material container kit assembly in which the material containers C1, C2, and C3 are separably accommodated.

For example, a first additive, a second additive, and a third additive may be accommodated in the material feeder 3. The first additive may be yeast, the second additive may be hops, and the third additive may be a flavor additive. The material feeder 3 may include a first material container mount 31 in which the first material container C1 accommodating the first additive therein is accommodated, a second material container mount 32 in which the second material container C2 accommodating the second additive therein is accommodated, and a third material container mount 33 in which the third material container C3 accommodating the third additive therein is accommodated.

The materials in the material receivers or the material containers C1, C2, and C3 may be extracted by pressure of the fluid, such as water supplied from the fluid supply module 5. When the materials are extracted by pressure, the fluid supplied from the fluid supply module 5 to the first main channel 41 may be mixed with the materials while passing through the material receivers or the material containers C1, C2, and C3, and the materials accommodated in the material receivers or the material containers C1, C2, and C3 may flow with the fluid into the second main channel 42.

Different kinds of additives may be separately accommodated in the material feeder 3. For example, when beer is made, the additives accommodated in the material feeder 3 may be yeast, hops, and a flavor additive, for example, and they may be separately accommodated.

When a plurality of material receivers is formed in the material feeder 3, the plurality of material receivers 31, 32, and 33 may be connected in series or in parallel with respect to a flow direction of fluid. For example, as shown in FIG. 1, a plurality of material receivers is connected in series, the first main channel 41 may be connected to the inlet 31a of the first material container mount 31, the outlet 31b of the first material container mount 31 may communicate with the inlet 32a of the second material container mount 32, the outlet 32b of the second material container mount 32 may communicate with the inlet 33a of the third material container mount 33, and the outlet 33b of the third material container mount 33 may be connected to the second main channel 42.

The fluid supply module 5 may include a tub 51, a pump 52 that pumps up fluid, such as water in the tub 51, and a heater 53 that heats the fluid pumped up by the pump 52. For example, the pump 52 may include a gear pump. The gear pump may be a rotary pump, that is, a pump that pumps liquid or fluid using engagement of two of the same rotors. The internal structure of a gear pump is well known, so it is not described herein.

The tub 51 and the pump 52 may be connected to a tub outlet channel 55a. The fluid in the tub 51 may be suctioned into the pump 52 through the tub outlet channel 55a. The pump 52 and the first end 41a of the first main channel 41 may be connected to a fluid supply channel 55b and the fluid discharged from the pump 52 may be guided to the first main channel 41 through the fluid supply channel 55b.

A flowmeter 56 that measures a flow rate of the fluid, such as water from the tub 51 may be disposed in the tub outlet channel 55a or the fluid supply channel 55b. Further, the tub 51 may be provided with a water level sensor (not shown) that measures an amount of fluid, such as water stored in the tub 51. The heater 53 may be disposed in the fluid supply channel 55b.

When the pump 52 is driven, the fluid in the tub 51 may be suctioned into the pump 52 through the tub outlet channel 55a and the fluid discharged from the pump 52 may be heated by the heater 53 while flowing through the fluid supply channel 55b, and may be guided to the first main channel 41.

The beverage dispenser 6 may be connected to the second main channel 42. The beverage dispenser 6 may include a beverage dispensing channel 61 that communicates with the fermentation module 1, a beverage dispensing valve 64 disposed in the beverage dispenser channel 61, and a dispenser 62 connected to the beverage dispenser channel 61.

The beverage dispensing channel 61 may communicate with the fermentation module 1 by being connected to the second main channel 42. The beverage dispensing channel 61 may communicate with the fermentation space S2 of the fermentation container 12. A first end 60 of the beverage dispensing channel 61 may be connected to the second main channel 42 between the material feeder 3 and the main valve 40 and a second end thereof may be connected to the dispenser 62.

The beverage dispensing valve 64 which opens/closes the beverage dispensing channel 61 may be disposed in the beverage dispensing channel 61. The beverage dispensing valve 64 may include a solenoid valve.

The beverage dispensing valve 64 may be opened when a beverage is dispensed, and the beverage dispensing valve 64 may be kept closed when a beverage is not dispensed. The beverage having passed through the beverage dispensing valve 64 may be guided to the dispenser 62.

A user may adjust dispensing of a beverage by manipulating the dispenser 62. When a user opens the dispenser 62, a beverage may be dispensed from the dispenser 62. The operation of opening/closing of the dispenser 62 is in connection with the beverage dispensing valve 64, so when a user opens the dispenser 62, the beverage dispensing valve 64 may be opened, and when a user closes the dispenser 62, the beverage dispensing valve 64 may be closed.

The gas discharger 7 may be connected to the fermentation module 1 and discharge gas produced in the fermentation container 12. The gas discharger 7 may include a gas discharge channel 71 connected to the fermentation module 1, and a gas discharge valve 73 connected to the gas discharge channel 71. The gas discharge channel 71 may be connected to the fermentation module 1, more particularly, to the fermentation lid 107. The fermentation lid 107 may have a gas discharge channel connecting portion 121 to which the gas discharge channel 71 may be connected.

The gas discharge channel connecting portion 121 may communicate with the fermentation space S2 of the fermentation container 12. The gas in the fermentation container 12 may flow to the gas discharge channel 71 through the gas discharge channel connecting portion 121 and may be discharged to the gas discharge valve 73 that is open.

With the beverage maker according to embodiments, it is possible to uniformly mix a fluid, such as water and malt by injecting air into the fermentation container 12 using the air injector 8, and in this process, bubbles generated from the liquid-state malt may be discharged outside through the gas discharge channel 71 and the gas discharge valve 73 over the fermentation container 12. Further, the gas discharge valve 73 may be kept closed in the fermentation operation of a beverage.

The air injector 8 may be connected to the fluid supply channel 55b or the first main channel 41 and may inject air. Air injected into the first main channel 41 from the air injector 8 may be injected into the fermentation container 12 sequentially through the bypass channel 43 and the second main channel 42. Accordingly, stirring or aeration may be performed in the fermentation container 12.

Further, the air injected into the first main channel 41 from the air injector 8 may remove remaining fluid or residue while passing through the material container mounts 31, 32, and 33. Accordingly, it is possible to keep the material container mounts 31, 32, and 33 clean.

The air injector 8 may include an air injection channel 81 connected to the fluid supply channel 55b or the first main channel 41, and air pump 82 connected to the air injection channel 81. The air pump 82 may pump up air into the air injection channel 81.

The air adjuster 15 may adjust pressure between the inner wall of the fermenter 110 and the outer side of the fermentation container 12. The air adjuster 15 may supply air between the fermentation container 12 and the inner wall of the fermenter 110 or may remove air from between the fermentation container 12 and the inner wall of the fermenter 110.

The air adjuster 15 may include an air supply channel 154 connected to the fermentation module 1, and an exhaust channel 157 connected to the air supply channel 154 to discharge air to the outside. A first end 154a of the air supply channel 154 may be connected to the first main channel 41 and a second end thereof may be connected to the fermentation module 1.

The fermentation module 1 may have an air supply channel connecting portion 117 to which the air supply channel 154 may be connected, and the air supply channel connecting portion 117 may communicate with the space between the inner wall of the fermenter 110 and the outer side of the fermentation container 12. The air supply channel connecting portion 117 may be formed at the fermenter 110 or the fermentation lid 107.

The air injected into the first main channel 41 from the air injector 8 may be guided between the outer side of the fermentation container 12 and the inner wall of the fermenter 110 through the air supply channel 154. As described above, the air supplied in the fermenter 110 may press the fermentation container 12 between the outer side of the fermentation container 12 and the inner wall of the fermenter 110.

The beverage in the fermentation container 12 may be pressed by the fermentation container 12 pressed by the air, and may flow to the second main channel 42 through the main channel connecting portion 115 when the main valve 40 and the beverage dispensing valve 64 are opened. The beverage flowing to the second main channel 42 from the fermentation container 12 may be dispensed outside through the beverage dispenser 6. On the other hand, the exhaust channel 157 may function as an air exhaust passage that discharges air between the fermentation container 12 and the fermenter 110 to the outside in cooperation with a portion of the air supply channel 154.

The air supply channel 154 may include a first channel extending from the first end 154a connected with the first main channel 41 to a connecting portion 157a to which the exhaust channel 157 is connected, and a second channel extending from the first end 154a to which the exhaust channel 157 is connected to the air supply channel connecting portion 117. The first channel may be an intake channel that guides the air pumped by the air pump 82 to the second channel. Further, the second channel may be an intake/exhaust compatible channel that supplies air, which has passed through the intake channel, between the fermenter 110 and the fermentation container 12 or that guides the air from between the fermenter 110 and the fermentation container 12 to the exhaust channel 157.

An exhaust valve 156 that opens/closes the exhaust channel 157 may be connected to the exhaust channel 157. The exhaust valve 156 may be opened such that the air between the fermentation container 12 and the fermenter 110 may be discharged outside, when the fermentation container 12 expands while a beverage is made.

The air adjuster 15 may further includes an air supply valve 159 that connects/disconnects the air that is pumped up from the air pump 82 and supplied between the fermentation container 12 and the fermenter 110. The air supply valve 159 may be disposed in the air supply channel 154. The air supply valve 159 may be disposed between the first end 154a connected with the first main channel 41 and the connecting portion 157a connected with the exhaust channel 157, in the air supply channel 154.

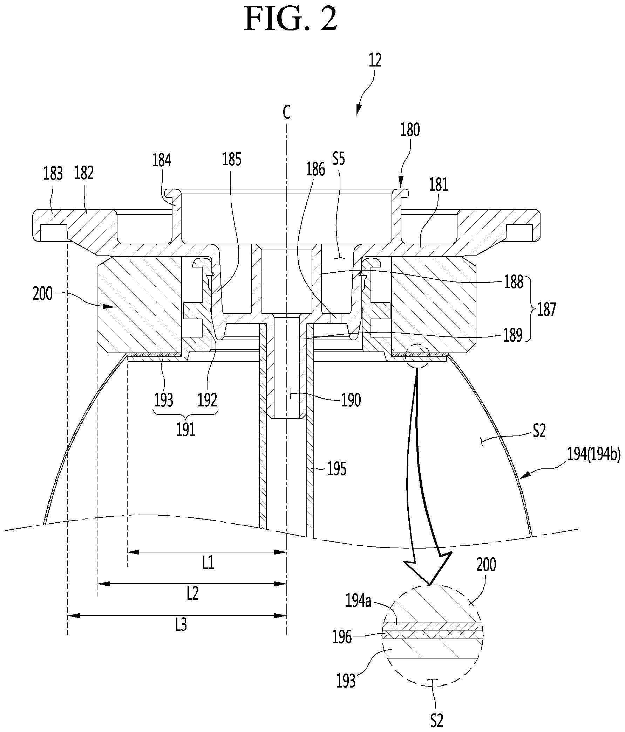

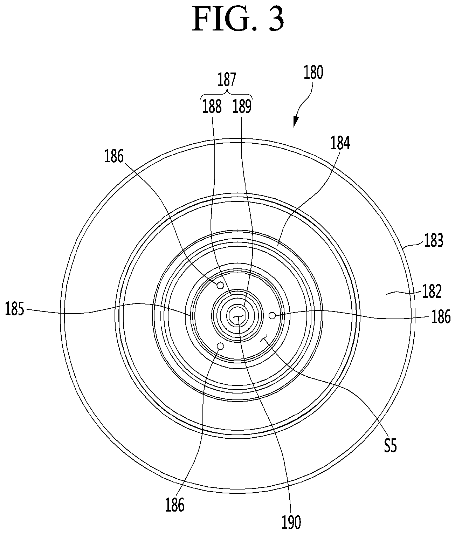

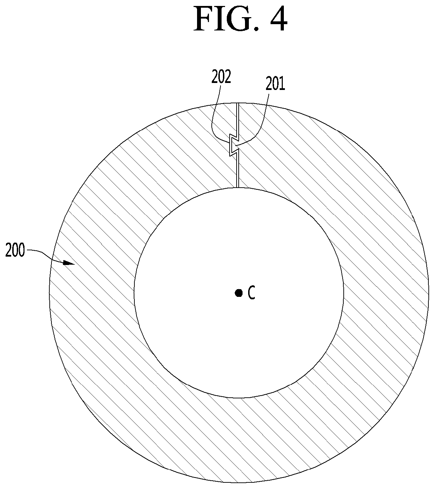

FIG. 2 is a cross-sectional view of a fermentation container 12 according to an embodiment. FIG. 3 is a plan view of the fermentation container 12 shown in FIG. 2. FIG. 4 is a horizontal cross-sectional view of a pressing member 200 according to an embodiment.

The fermentation container 12 may include a container body 180 seated over the fermenter 110; a flexible container 194 thermally bonded to the container body 180, having fermentation space S2, and positioned in the fermenter 110; and includes a pressing member 200 that firmly maintains thermal bonding between the container body 180 and the flexible container 194. The fermentation container 12 may further include a tube 195 connected to a lower portion of the container body 180 and extending up to a lower portion in the flexible container 194.

The container body 180 may include a hard material. Accordingly, the fermentation container 12 may be stably seated and supported in the fermenter 110.

The container body 180 may be formed as a single unit or may be formed by combining a plurality of members. For example, the container body 180 may include a main body 181 and a connecting body 191 that is fastened to the main body 181 and to which the flexible container 194 may be bonded. The main body 181 may have substantially a disc shape.

An outer hollow portion 184 may be formed at the container body 180, more particularly, the main body 181. The outer hollow portion 184 may protrude upward from the container body 180.

Further, a seating portion 183 that is seated on the fermenter 110 may be formed at the container body 180. The seating portion 183 may be formed at a circumferential portion 182 of the main body 181. The circumferential portion 182 may be positioned outside of the outer hollow portion 184 in a radial direction of the container body 180.

A recession 185 recessed downward may be formed at the container body 180. The recession 185 may be formed by recessing at least a portion of the portion positioned inside of the outer hollow portion 184 of a top surface of the main body 181. The recession 185 may form a recessed space S5 that communicates with an inside of the outer hollow portion 184. An inner diameter of the recessed space S5 may be smaller than an inner diameter of the outer hollow portion 184.

The recessed space S5 may refer to a space between an inner circumference of the recession 185 and an outer circumference of an inner hollow portion 187. The inner hollow portion 187 which communicates with the fermentation space S2 may be formed at the container body 180. The inner hollow portion 187 may be formed at the recession 185 of the main body 181. A diameter of the inner hollow portion 187 may be smaller than a diameter of the recession 185.

The inner hollow portion 187 may form an inner channel 190 in cooperation with the tube 195. Fluid, such as water, air, or a mixture may be supplied into the fermentation space S2 of the flexible container 194 through the inner channel 190. When a finished beverage is dispensed, the beverage accommodated in the fermentation space S2 may be dispensed from the flexible container 194 through the inner channel 190.

The inner hollow portion 187 may have a first connecting portion 188 that protrudes upward from the recession 185, and a second connecting portion 189 that protrudes downward. An outer circumferential surface of the first connecting portion 188 may be spaced apart from an inner circumferential surface of the recession 185. The first connecting portion 185 may communicate with the main channel connecting portion 115 formed at the fermentation lid 107. The recession 185 may be separably connected to the second connecting portion 189.

The tube 195 may be elongated downward to be adjacent to a bottom surface of the flexible container 194. Accordingly, when a finished beverage is dispensed, the beverage in a lower portion of the flexible container 194 may be easily dispensed through the tube 195.

The tube 195 may be a flexible tube and may be folded with the flexible container 194, so there is an advantage that the fermentation container 12 may be stored in a compact size.

At least one gas exhaust hole 186, also referred to as a gas discharge hole, through which gas in the fermentation space S2 may be discharged may be formed at the container body 180. The gas exhaust hole 186 may communicate with the fermentation space S2 in the flexible container 194.

The gas exhaust hole 186 may extend vertically through a floor of the recession 185 of the main body 181. The gas exhaust hole 186 may be formed outside of the inner hollow portion 187 in a radial direction of the container body 180.

That is, the gas discharge hole 186 may face the space between the inner circumference of the recession 185 and the outer circumference of the inner hollow portion 187. More particularly, the gas discharge hole 186 may face the space between the inner circumference of the recession 185 and the outer circumference of the first connecting portion 188.

In the fermentation operation of a beverage, an internal pressure of the flexible container 194 may be increased by fermentation gas generated by the beverage, and when the pressure is excessive, the flexible container 194 may explode or break. The fermentation gas may be discharged out of the flexible container 194 through the gas exhaust hole 186, whereby the internal pressure of the flexible container 194 may be maintained at an appropriate level.

The connecting body 191 may be separably fastened to the main body 181. Accordingly, a user may replace the tube 195, or the connecting body 191 and the flexible container 194 and mount new ones to the main body 181.

The connecting body 191 may include a connecting portion 192 and a bonding portion 193. The connecting portion 192 may have a substantially hollow cylindrical shape and may be fastened to the main body 181. The recession 185 of the main body 181 may be fastened by being inserted into the connecting portion 192. An inner circumferential surface of the connecting portion 192 may be fitted and fastened to the outer circumferential surface of the recession 185. The connecting portion 192 may connect the main body 181 and the bonding portion 193.

The bonding portion 193 may be formed in ring-shaped plate shape. The bonding portion 193 may extend outward from a lower end of the connecting portion 192 in a radial direction of the connecting portion 192. The bonding portion 193 may be positioned under the main body 181 and may face a bottom surface of the main body 181. The bonding portion 193 and the bottom surface of the main body 181 may be spaced apart in a vertical direction.

The flexible container 194 may include a flexible material, such that an internal volume may be easily changed. The flexible container 194 may include a thermal bonding portion 194a thermally bonded to the bonding portion 193, and a container portion 194b connected to the thermal bonding portion 194a and forming the fermentation space S2.

The thermal bonding portion 194a may be thermally bonded to a top surface of the bonding portion 193. A thermal bonding layer 196 may be provided between the thermal bonding portion 194a and the bonding portion 193. The thermal bonding layer 196 may be, for example, a thermosetting paint that makes thermal bonding between the thermal bonding portion 194a and the bonding portion 193 easy.

The container portion 194b may form the fermentation space S2 by being connected to the thermal bonding portion 194a. The fermentation space S2 may be formed under the bonding portion 193.

The container portion 194b may expand due to gas, such as carbonic acid generated by fermentation in the fermentation space S2. When the container portion 194b expands, a force may be applied to the thermal bonding portion 194a to be separated from the bonding portion 194.

Accordingly, in order to firmly maintain thermal bonding between the bonding portion 193 and the thermal bonding portion 194b, a pressing member 200 presses the thermal bonding portion 194b to the bonding portion 193. The pressing member 200 is mounted on the container body 180. More particularly, the pressing member 200 is mounted by being fitted between the main body 181 and the thermal bonding portion 194a.

A top surface of the pressing member 200 may be in contact with the bottom surface of the main body 181 and a bottom surface of the pressing member 200 may be in contact with a top surface of the thermal bonding portion 193.

The pressing member 200 may include a soft material or an elastic material, such as a sponge. For example, the pressing member 200 may include a polyurethane material. Accordingly, the pressing member 200 may be compressed between the bottom surface of the main body 181 and the top surface of the thermal bonding portion 194a, and the thermal bonding portion 194a may be pressed downward, that is, toward the bonding portion 193 by elasticity of the pressing member 200.

The pressing member 200 may have a substantially circular ring shape and may surround an outer circumference of the connecting portion 192. A locking portion 201, for e.g. a locking protrusion 201 may be formed at a first end of the pressing member 200, and a fitting portion or recess 202 in which the locking protrusion 201 may be fitted may be formed at a second end of the pressing member 200. The locking protrusion 201 may be fitted in the fitting portion 202. The pressing member 200 may have a circular ring shape and may surround an outer circumference of the connecting portion 192. Accordingly, the pressing member 200 may be easily mounted on the container body 180.

The container body 180 may have a virtual central axis C, hereinafter also referred to as the central axis C. The virtual center axis C of the container body 180 may be a virtual vertical center axis that forms a center axis of the connecting portion 192 having a substantially hollow cylindrical shape. That is, the center axes of the main body 181 and the connecting portion 192 may be aligned.

The pressing member 200 may be spaced apart from the seating portion 183 formed at the circumferential portion 182 of the main body 181. A distance L3 from the virtual center axis C of the container body 180 to the seating portion 183 may be larger than a distance L2 from the virtual center axis C of the container body 180 to an outer circumference of the pressing member 200. Accordingly, when the fermentation container 12 is inserted and seated in the fermenter 110, the seating portion 183 may be smoothly seated without interference between the pressing member 200 and the fermenter 110.

Further, the distance L2 from the virtual center axis C of the container body 180 to the outer circumference of the pressing member 200 may be the same as or larger than a distance L1 from the virtual center axis C of the container body 180 to the outer circumference of the bonding portion 193. Accordingly, there is an advantage that it is possible to more reliably prevent the phenomenon in which the thermal bonding portion is separated from the bonding portion by expansion of the container portion and it is possible to make a beverage with high quality because carbonic acid in the fermentation space does not leak.

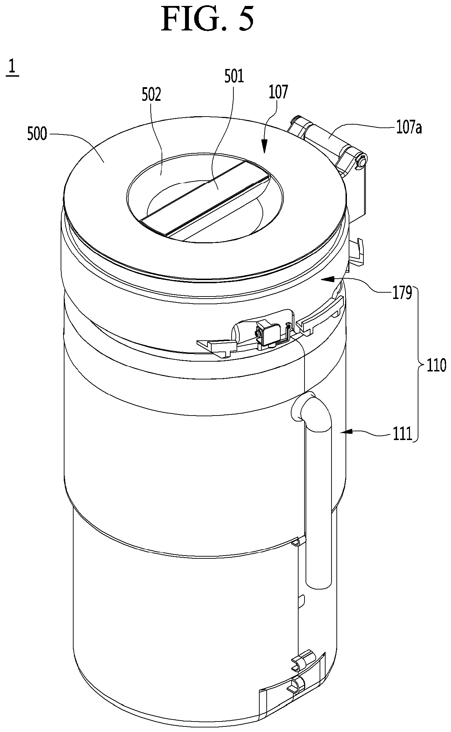

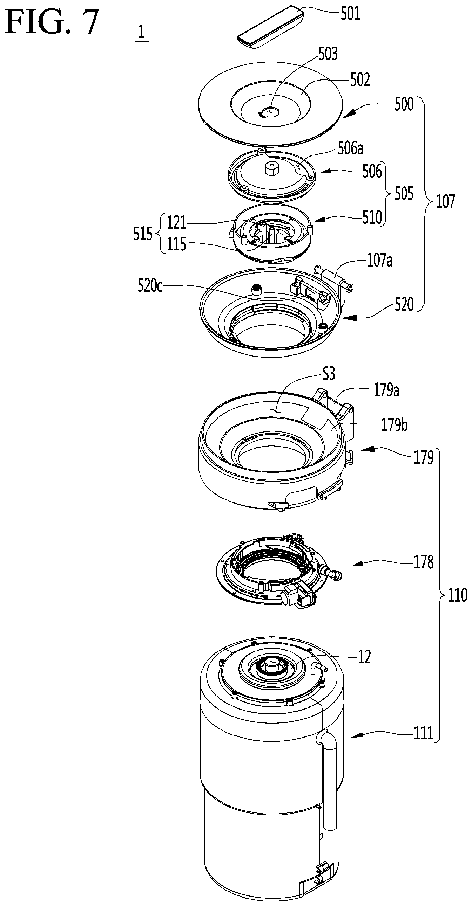

FIG. 5 is a perspective view of a fermentation module according to an embodiment. FIG. 6 is a perspective view when the fermentation lid of the fermentation module shown in FIG. 5 is open. FIG. 7 is an exploded perspective view of the fermentation module according to an embodiment.

As described above, the fermentation module 1 may include the fermenter 110 having the opening 170 and the fermentation lid 107 that opens/closes the opening 170. The fermenter 110 may include a fermentation tank 111, a restricting body 178, and a lid seat body 179.

The space S1 in which the fermentation container 12 may be inserted may be formed in the fermentation tank 111. That is, the fermentation container 12 may be inserted into the fermentation tank 111 and fermentation of a beverage may proceed in the fermentation space S2 of the fermentation container 12.

The restricting body 178 may restrict an opening/closing operation of the fermentation lid 107. A rotary body 505 included in the fermentation lid 107 may be restricted or released by the restricting body 178, depending on a rotational direction thereof. The restricting body 178 may be fastened to the fermentation tank 111 over the fermentation tank 111.

The lid seat body 179 may be disposed over the fermentation tank 111 and may support the fermentation lid 107 from under the fermentation lid 107. A lid seat space S3 may be formed in the lid seat body 179. At least a portion of the fermentation lid 107 may be positioned and seated in the lid seat space S3. An inner diameter of the lid seat space S3 may decreases in a downward direction or may be maintained at a predetermined level.

A seat surface 179b on which the fermentation lid 107 may be seated may be formed at the lid seat body 179. The seat surface 179b may be formed as a curved surface, whereby a contact area between the fermentation lid 107 and the lid seat body 179 increases, so even if the internal pressure of the fermenter 110 increases, it is possible to prevent gas, for example, from leaking between the fermentation lid 107 and the lid seat body 179. A hinge connecting portion 179a may be formed at the lid seat body 179 and may be hinged to the hinge portion 107a formed at the fermentation lid 107.

The fermentation lid 107 may include a top cover 500, a lid body 520, and the rotary body 505. The top cover 500 may form a top surface of the fermentation lid 107. The top cover 500 may have a substantially disc shape and may have a rotatable handle 501. The handle 501 may be installed in an installation portion 502 recessed downward from the top cover 500.

A through-hole 503 may be formed in the top cover 500 and the handle 501 may be fastened to the rotary body 505 through the through-hole 503. Accordingly, the handle 501 may rotate with the rotary body 505.

The lid body 520 may be seated on the lid seat body 179. An open top surface of the lid body 520 may be covered by the top cover 500. The lid body 520 may form a circumferential portion of the fermentation lid 107. The lid body 520 may be formed in a hollow cylindrical shape a diameter of which decreases downward or is maintained at a predetermined level.

An outer circumferential surface of the lid body 520 may be a curved surface corresponding to the seat surface 179b of the lid seat body 179. The rotary body 505 may be rotatably mounted on the lid body 520.

The rotary body 505 may be disposed under the top cover 500. A portion of an upper portion of the rotary body 505 may be positioned inside of the lid body 520. The rotary body 505 may be fastened to the handle 501 of the top cover 500, thereby being able to rotate with the handle 501.

The rotary body 505 may be restricted by or released from the restricting body 178, depending on the rotational direction. That is, when a user rotates the handle 501 in a first direction, the rotary body 505 may be restricted by the restricting body 178 and the fermentation lid 107 may be closed tightly to the fermenter 110. In contrast, when a user rotates the handle 501 in a second direction, the rotary body 505 may be released from the restricting body 178 and the fermentation lid 107 may be opened.

The rotary body 505 may include an upper cover 506 fastened to the top cover 500, and a hollow body 510 fastened to the upper cover 506. The hollow body 510 may press down the fermentation container 12 mounted on the fermentation tank 111. The hollow body 510 may or may not be hollow and may be generally referred to as the body 510.

A channel connecting portion 515 that communicates with the fermenter 110, that is, the fermentation space S2 in the fermentation container 12 may be formed at the hollow body 510. The channel connecting portion 515 may include a main channel connecting portion 115, and a gas discharge channel connecting portion 121.

A top surface of the hollow body 510 may be open and the open top surface of the hollow body 510 may be covered by the upper cover 506. Accordingly, the channel connecting portion 515 formed at the hollow body 510 may be protected by the upper cover 505.

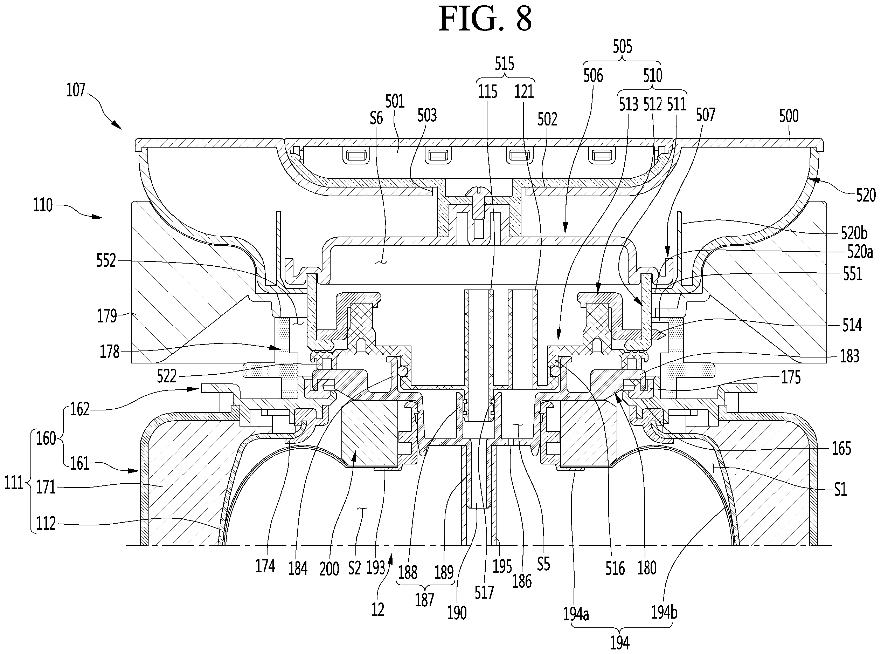

At least a portion including a lower end of an outer circumference of the hollow body 510 may face an inner circumference of the restricting body 178 in the radial direction, and a locking portion 514 may be formed at the portion. That is, the locking portion 514 protruding radially outward from the outer circumference of the hollow body 510 may face the inner circumference of the restricting body 178. The locking portion 514 may be locked in the vertical direction to a locking step 551 (see FIG. 8) formed at the restricting body 178.

The upper cover 506 may be fastened to the handle 501 through the through-hole 503 formed at the top cover 500. The upper cover 506 may be formed in a substantially disc shape and may cover the open top surface of the hollow body 510.

The upper cover 506 may be fastened to the hollow body 510, and the upper cover 506 and the hollow cover 510 may rotate together. The lid inner space S6 (see FIG. 8) may be formed between the upper cover 506 and the hollow body 510, and the channel connecting portion 515 may be positioned in the lid inner space S6.

An opening 520c through which the channels 42 and 71 connected to the channel connecting portion 515 pass may be formed at the lid body 520. That is, the second main channel 42 (see FIG. 1) connected to the main channel connecting portion 115 and the gas discharge channel 71 (see FIG. 1) connected to the gas discharge channel connecting portion 121 may pass through the opening 520c.

Further, an open portion 506a that prevents interference with the channel may be formed at the upper cover 506. Accordingly, the second channel 42 and the gas discharge channel 71 may enter the lid inner space S6 through the opening 520c and the open portion 506a from outside of the fermentation module 1, and may be connected to the main channel connecting portion 115 and the gas discharge channel connecting portion 121, respectively.

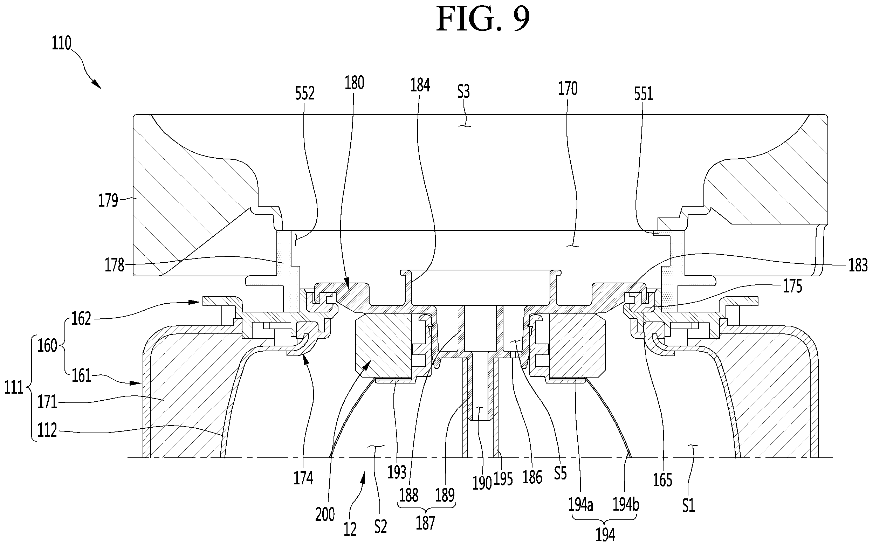

FIG. 8 is a cross-sectional view showing an inside of the fermentation module according to an embodiment. FIG. 9 is a cross-sectional view when the fermentation lid of the fermentation module shown in FIG. 8 is open.

The fermentation tank 111 may include a case 160, an inner tank 112 accommodated in the case 160, and a thermal insulating portion 171 positioned between the case 160 and the inner tank 112. The case 160 may include a case main body 161, and a bracket 162 fastened to an upper portion of the case main body 161. The case main body 161 may configure an external appearance of the fermentation module 1.

The bracket 162 may be formed substantially in a ring shape and may be fastened to the case main body 161 over the case main body 161. Further, the bracket 162 may be fastened to the restricting body 178 under the restricting body 178.

A seat portion or seat 165 on which the container body 180 of the fermentation container 12 may be seated may be formed at the fermentation tank 111. The seat portion 165 may be formed at the bracket 162. The seating portion 183 of the fermentation container 12 may be seated on the seat portion 165.

A first sealing member or seal 175 may be mounted on the seat portion 165, and the seating portion 183 of the container body 180 may be seated on the first sealing member 175. The seat portion 165 may be referred to as a "sealing member mount".

The inner tank 112 may be fastened to the bracket 162 and accommodated in the case main body 161. A second sealing member or seal 174 may be disposed on a bottom surface of the bracket 162 and may seal a gap between the inner tank 112 and the bracket 162.

The internal space S1 which may communicate with the opening portion 170 may be formed in the inner tank 112 and may be a space in which the fermentation container 12, that is, the flexible container 194 may be accommodated. That is, the fermentation container 12 may be inserted into the internal space S1 of the inner tank 112 through the opening 170.

The thermal insulating portion 171 may be positioned between the inner tank 112 and the case 160. The thermal insulating portion 171 may maintain a temperature in the inner tank 112 by surrounding the fermenter 110.

The restricting body 178 may restrict the rotary body 505 of the fermentation lid 107 in the vertical direction. The restricting body 178 may have a substantially hollow cylindrical shape and may be positioned over the fermentation tank 111. The restricting body 178 may be fastened to the fermentation tank 111, that is, the bracket 162. An inside of the restricting body 178 may form the opening 170 that communicates with the internal space S1 of the inner tank 112.

Grooves 552 from which the locking portion 514 of the hollow body 510 may be separated and locking steps 551 to which the locking portion 514 may be locked may be alternately formed on the inner circumference of the restricting body 178.

When the fermentation lid 107 moves down and closes tightly the opening 170, the locking portion 514 may be positioned under the grooves 552 through the grooves 552. In this state, when the rotary body 505 is rotated a predetermined angle in a first direction, the locking portion 514 may move under the locking step 551. Accordingly, the locking portion 514 may be locked to the locking step 551, so the fermentation lid 107 may be restricted in the vertical direction.

When the rotary body 505 is rotated a predetermined angle in an second opposite direction with the fermentation lid 107 restricted to the restricting body 178, the locking portion 514 may move under the grooves 552. In this case, the locking portion 514 may move up through the grooves 552, and the fermentation lid 107 may be released in the vertical direction.

The fermentation lid 107, that is, the lid body 520 may be seated on the lid seat body 179. The lid seat body 179 may be disposed over the fermentation tank 111. The lid seat body 179 may be fastened to the restricting body 178 or the case 160.

The lid seat space S3 may be formed at the lid seat body 179, and the fermentation lid 107 may be at least partially positioned and seated in the lid seat space S3. The lid seat space S3 may be positioned over the opening 170 of the fermenter module 111 and may communicate with the opening 170.

The fermentation lid 107 may open/close the opening 170 of the fermenter 110. The fermentation lid 107 may cover the opening 170 by being inserted into the lid seat space S3 formed at the lid seat body 179. The fermentation lid 107 may fix the fermentation container 12 by pressing down the container body 180 of the fermentation container 12 seated in the fermentation tank 111.

As described above, the fermentation lid 107 may include the top cover 500, the lid body 520, and the rotary body 505. The top cover 500 may cover the lid body 520 from above and may have the rotatable handle 501.

The installation portion 502 in which the handle 501 may be installed may be formed at the top cover 500. The installation portion 502 may be recessed downward from a top surface of the top cover 500. A recessed depth of the installation portion 502 may correspond to a vertical height of the handle 501. The handle 501 may rotate in a state in which it is installed in the installation portion 502.

The through-hole 503 may be formed at the installation portion 502 of the top cover 500 and a center shaft of the handle 501 may be fitted in the through-hole 503. The handle 501 may rotate about the center shaft. The rotary body 505 may be positioned under the top cover 500 and may rotate with the handle 501.

As described above, the rotary body 505 may include the upper cover 506 and the hollow body 510. The upper cover 506 may be positioned under the top cover 500 and may be positioned in the lid body 520.

A hollow body connecting portion 507 connected with an upper end portion or end of the hollow body 510, that is, an upper end portion or end of the outer body 511 may be formed at the upper cover 506. The hollow body connecting portion 507 may be fitted on the upper end portion of the hollow body 510 over the hollow body 510.

The upper cover 506 may form the lid inner space S6 in cooperation with the hollow body 510. The lid inner space S6 may be formed between the upper cover 506 and the hollow body 510. The lid inner space S6 may be a space that a channel connected to the channel connecting portion 515 enters.

The hollow body 510 may be positioned under the upper cover 506 and may rotate with the handle 501 and the upper cover 506. The hollow body 510 may include an outer body 511, an inner body 512 positioned inside of the outer body 511, and a channel body 513 fastened to the inner body 512.

The outer body 511 may have a substantially hollow cylindrical shape. The outer body 511 may form a circumferential portion of the hollow body 510.

At least one locking portion 514 may be formed on an outer circumference of the outer body 511. The locking portion 514 may be positioned under the locking steps 551 or the grooves 552 formed on the inner circumference of the restricting body 178.

When the locking portion 514 is positioned under the locking steps 551, the fermentation lid 107 cannot be opened while restricted by the restricting body 178. In contrast, when the locking portion 514 is positioned under the grooves 552, the fermentation lid 107 may be opened when released from the restricting body 178.

An upper end portion or end of the outer body 511 may be connected to the hollow body connecting portion 507 of the upper cover 506. The inner body 512 may be disposed inside of the outer body 511. The inner body 512 may function as a bracket that connects the outer body 511 and the channel body 513. The channel connecting body 513 may be fastened to the inner body 512.

A container body pressing portion 522 may be formed at the channel connecting body 513. The container body pressing portion 522 may protrude downward from an edge of a bottom surface of the channel connecting body 513. The container body pressing portion 522 may press down the container body 180, that is, the circumferential portion 182 of the container body 180 (see FIG. 2). Accordingly, the container body 180 may be fixed to the fermentation tank 111.

At least one channel connecting portion 515 may be formed at the channel connecting body 513. The channel connecting portion 515 may protrude from the channel connecting body 513 to the lid inner space S6. That is, the channel connecting portion 515 may protrude upward from the channel connecting body 513.

The channel connecting portion 515 may include the main channel connecting portion 115 to which the second main channel 42 (see FIG. 1) may be connected, and the gas discharge channel connecting portion 121 to which the gas discharge channel 71 (see FIG. 1) may be connected. Further, a container body connecting portion 516 connected with the container body 180 of the fermentation container 12 seated in the fermentation tank 111 may be formed at the channel connecting body 513.

The container body connecting portion 516 may protrude downward from the channel body 513. An outer circumference of the container body connecting portion 516 may be fitted on an inner circumference of the outer hollow portion 184 of the container body 180, thereby being connected with the container body 180. An O-ring may be disposed between the container body connecting portion 516 and the outer hollow portion 184.

The gas discharge channel connecting portion 121 may protrude upward from the container body connecting portion 516. The gas discharge channel connecting portion 121 may be positioned over the recessed space S5 of the container body 180. That is, the gas discharge channel connecting portion 121 may communicate with the recessed space S5. Accordingly, the fermentation space S2 in the fermentation container 12 may communicate with the gas discharge channel connecting portion 121 through the gas discharge hole 186. The gas in the fermentation container 12 may be taken out to the recessed space S5 through the gas discharge hole 186 and may be discharged to the gas discharge channel 71 (see FIG. 1) through the gas discharge channel connecting portion 121.

The main channel connecting portion 115 may protrude upward from the container body connecting portion 516. An inner channel connecting portion 517 that communicates with the main channel connecting portion 115 and protrudes downward may be formed at the container body connecting portion 516.

The inner channel connecting portion 517 may be fitted and connected to the inner hollow portion 187 of the container body 180, that is, the first connecting portion 188. An O-ring may be disposed between the inner channel connecting portion 517 and the first connecting portion 188.

Accordingly, the fermentation space S2 in the fermentation container 12 may communicate with the main channel connecting portion 115 through the inner channel 190. Fluid guided to the second main channel 42 (see FIG. 1) may flow into the fermentation space S2 sequentially through the main channel connecting portion 115, the inner channel 190, and the tube 195. Further, the finished beverage in the fermentation space S2 may be discharged to the second main channel 42 (see FIG. 1) sequentially through the tube 195, the inner channel 190, and the main channel connecting portion 115.

The lid body 520 may be seated on the lid seat body 179. The open top surface of the lid body 520 may be covered by the top cover 500. The lid body 520 may form a circumferential portion of the fermentation lid 107.

An upper cover anti-separating portion 520a and an upper cover accommodating portion 520b may be formed at the lid body 520. The upper cover anti-separating portion 520a may form a bottom surface of the lid body 520.

The upper cover anti-separating portion 520a may be positioned over the edge portion 508 of the upper cover 506. The upper cover anti-separating portion 520a may vertically face the edge portion 508 of the upper cover 506.

The upper cover anti-separating portion 520a may radially face the hollow body 510, that is, the outer circumference of the outer body 511 forming the circumferential portion of the hollow body 510. Accordingly, the upper cover anti-separating portion 520a may prevent the upper cover 506 from separating under the lid body 520 and may prevent the outer body 511 from bending radially outward.

The upper cover accommodating portion 520b may protrude upward from the upper cover anti-separating portion 520a. The upper cover accommodating portion 520b may have a substantially hollow cylindrical shape.

The upper cover accommodating portion 520b may be positioned radially outside of the edge portion 508 of the upper cover 506. The upper cover accommodating portion 520b may radially face the edge portion 508 of the upper cover 506. That is, the upper cover accommodating portion 520b may surround the outer circumference of the upper cover 506.

As described above, the internal space S1 in which the flexible container 194 is accommodated may be formed in the inner tank 112 and the fermentation space S2 in which fermentation proceeds and a beverage is made may be formed in the flexible container 194. When the seating portion 193 of the container body 180 is seated on the seat portion 165, the flexible container 194 and the pressing member 200 may be positioned in the internal space S1 of the inner tank 112.

As shown in FIG. 9, when the container portion 194b of the flexible container 194 does not expand, the outer surface of the container portion 194b may be spaced apart from the bottom surface of the pressing member 200. On the other hand, as shown in FIG. 8, fermentation may proceed in the fermentation space S2 with the fermentation lid 107 closing tightly the fermenter 110, and the container portion 194b of the flexible container 194 may expand due to gas, such as carbonic acid generated during fermentation.

When the container portion 194b expands, a portion of the outer side of the container portion 194b may come in contact with the bottom surface of the pressing member 200. That is, the upper portion of the container portion 194b may expand upward, and in this case, the portion adjacent to the thermal bonding portion 194a of the container portion 194b may be blocked by the bottom surface of the pressing member 200, so upward expansion may be restricted.

Accordingly, even if the container portion 194b is expanded by the internal pressure of the fermentation space S2, it is possible to prevent the internal pressure from being applied to the thermal bonding portion 194a. Therefore, it is possible to separate the thermal bonding portion 194a and the bonding portion 193.

Embodiments disclosed herein provide a fermentation container that prevents a flexible container thermally bonded to a bonding portion of a container body from separating from the bonding portion due to internal pressure, and a beverage maker including the fermentation container. Embodiments disclosed herein further provide a fermentation container that can make a beverage with high quality by preventing leakage of carbonic acid between a bonding portion and a flexible container, and a beverage maker including the fermentation container.

A fermentation container according to an embodiment may include a main body; a bonding portion spaced downward apart from a bottom surface of the main body; a connecting portion configured to connect the bonding portion and the main body; a flexible container including a thermal bonding portion thermally bonded to a top surface of the bonding portion, and a container portion connected to the thermal bonding portion and forming a fermentation space under the bonding portion; and a pressing member having an elastic material and configured to press the thermal bonding portion to the bonding portion by being fitted between the main body and the thermal bonding portion. A seating portion that is seated on a fermenter may be formed at an edge of the main body, and the seating portion may be spaced apart from the pressing member.

A distance from a virtual central axis of the main body to the seating portion may be larger than a distance from the virtual central axis of the main body to an outer circumference of the pressing member. A top surface of the pressing member may be in contact with a bottom surface of the main body, and a bottom surface of the pressing member may be in contact with a top surface of the thermal bonding portion.

The connecting portion may have a hollow cylindrical shape and may be connected by being fitted on an outer circumference of a recession recessed downward from the main body. The bonding portion may extend radially outward from a lower end of the connecting portion.

The pressing member may have a cylindrical ring shape surrounding an outer circumference of the connecting portion. A locking protrusion may be formed at one or a first end of the pressing member and a fitting portion in which the locking protrusion is fitted may be formed at the other or a second end of the pressing member.

A distance from a virtual central axis of the connecting portion to an outer circumference of the pressing member may be equal to or larger than a distance from the virtual central axis of the connecting portion to an outer circumference of the bonding portion. When the container portion expands, a portion of an outer surface of the container portion may come in contact with a bottom surface of the pressing member.

A beverage maker according to an embodiment may include a fermenter having an opening; a fermentation lid configured to open and close the opening; and a fermentation container inserted into the fermenter through the opening. The fermentation container may include a container body; a flexible container including a thermal bonding portion thermally bonded to the container body, and a container portion connected to the thermal bonding portion and forming a fermentation space; and a pressing member mounted on the container body, having an elastic material, and configured to press the thermal bonding portion.

The container body may include a main body having a seating portion formed at an edge thereof and seated on the fermenter; and a bonding portion that is spaced downward apart from a bottom surface of the main body and to which the thermal bonding portion may be thermally bonded, and in which the pressing portion is configured to press the thermal bonding portion to the bonding portion by being fitted between the main body and the thermal bonding portion. A distance from a virtual central axis of the container body to an outer circumference of the pressing member may be equal to or larger than a distance from virtual central axis of the container body to an outer circumference of the bonding portion and may be smaller than a distance from the virtual central axis of the container body to the seating portion.

The pressing member may press the thermal bonding portion of the flexible container toward the bonding portion, and thus, it is possible to prevent separation of the thermal bonding portion from the bonding portion. Accordingly, a gap is not generated between the thermal bonding portion and the bonding portion, carbonic acid in the flexible container does not leak, and there is an advantage that a beverage with high quality may be made.

Further, as the pressing member includes an elastic material, the thermal bonding portion may be easily pressed to the bonding portion by the elasticity of the pressing member. Furthermore, the seating portion and the pressing member may be spaced, and the distance to the seating portion may be larger than the distance to the pressing member from the virtual center axis of the main body. Accordingly, when the fermentation container is inserted and seated in the fermenter, the seating portion may be smoothly seated without interference between the pressing member and the fermenter. As the pressing member has a circular ring shape surrounding the outer circumference of the connecting portion, the connecting portion may be protected by the pressing member.

The locking protrusion formed at one end of the pressing member may be locked to the fitting portion formed at the other end. Accordingly, the pressing member may be easily mounted while surrounding the outer circumference of the connecting portion.

The distance to the outer circumference of the pressing member may be larger than or the same as the distance to the outer circumference of the boding portion from the virtual center axis of the connecting portion. Accordingly, it is possible to more reliably prevent separation of the thermal bonding portion from the bonding portion.

The portion adjacent to the thermal bonding portion of the container port may be blocked by the bottom surface of the pressing member, so upward expansion may be restricted, and accordingly, it is possible to transmit internal pressure of carbonic acid to the thermal bonding portion.

The above description merely explains the present technique and embodiments may be changed and modified in various ways. Accordingly, the embodiments described herein are provided merely not to limit, but to explain the present technique, and the present technique is not limited by the embodiments. A protective range of embodiments should be construed by the following claims and the scope should be construed as being included in the patent right.

It will be understood that when an element or layer is referred to as being "on" another element or layer, the element or layer can be directly on another element or layer or intervening elements or layers. In contrast, when an element is referred to as being "directly on" another element or layer, there are no intervening elements or layers present. As used herein, the term "and/or" includes any and all combinations of one or more of the associated listed items.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section could be termed a second element, component, region, layer or section without departing from the teachings of the present invention.

Spatially relative terms, such as "lower", "upper" and the like, may be used herein for ease of description to describe the relationship of one element or feature to another element(s) or feature(s) as illustrated in the figures. It will be understood that the spatially relative terms are intended to encompass different orientations of the device in use or operation, in addition to the orientation depicted in the figures. For example, if the device in the figures is turned over, elements described as "lower" relative to other elements or features would then be oriented "upper" relative to the other elements or features. Thus, the exemplary term "lower" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Embodiments of the disclosure are described herein with reference to cross-section illustrations that are schematic illustrations of idealized embodiments (and intermediate structures) of the disclosure. As such, variations from the shapes of the illustrations as a result, for example, of manufacturing techniques and/or tolerances, are to be expected. Thus, embodiments of the disclosure should not be construed as limited to the particular shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Any reference in this specification to "one embodiment," "an embodiment," "example embodiment," etc., means that a particular feature, structure, or characteristic described in connection with the embodiment is included in at least one embodiment. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

## Claims

1. A fermentation container (12) for a beverage maker, comprising:
a main body (181) having a central axis (C) and a circumferential portion (182);
a bonding portion (193) vertically spaced apart from a bottom surface of the circumferential portion (182) of the main body (181);
a connecting portion (192) configured to connect the bonding portion (193) and the main body (181); and
a flexible container (194) disposed below the circumferential portion (182) of the main body (181) and including a thermal bonding portion (194a) and a container portion (194b), wherein the thermal bonding portion (194a) is thermally bonded to a surface of the bonding portion (193) facing the circumferential portion (182) of the main body (181), and wherein the container portion (194b) is connected to the thermal bonding portion (194a) and includes a fermentation space (S2) therein;
wherein the fermentation container (12) is a pack in which materials for making a beverage are accommodated,
wherein the materials are accommodated in the fermentation space (S2); and
wherein the fermentation container (12) further comprises:
a pressing member (200) comprising an elastic material and being fitted between the circumferential portion (182) of the main body (181) and the thermal bonding portion (194a) to press the thermal bonding portion (194a) to the bonding portion (193).

2. The fermentation container (12) according to claim 1, wherein a thermal bonding layer (196) is provided between the thermal bonding portion (194a) and the surface of the bonding portion (193) facing the circumferential portion (182) of the main body (181).

3. The fermentation container (12) according to claim 1 or 2, wherein the surface of the bonding portion (193) facing the circumferential portion (182) of the main body (181) has an annular plate shape.

4. The fermentation container (12) according to any one of claims 1 to 3, comprising a seating portion (183) for being seated on a fermenter (110) of the beverage maker, wherein the seating portion (183) is formed radially outwards of the circumferential portion (182) of the main body (181) and wherein the seating portion (183) is spaced apart from the pressing member (200).

5. The fermentation container (12) according to claim 4, wherein a distance (L3) from the central axis (C) of the main body (181) to the seating portion (183) is larger than a distance (L2) from the central axis (C) of the main body (181) to an outer circumferential side surface of the pressing member (200).

6. The fermentation container (12) according to any one of claims 1 to 5, wherein a distance (L2) of an outer circumferential side surface of the pressing member (200) from the central axis (C) is equal to or larger than a distance (L1) of an outer circumference of the bonding portion (193) from the virtual central axis (C).

7. The fermentation container (12) according to any one of claims 1 to 6, wherein a top surface of the pressing member (200) is in contact with the bottom surface of the circumferential portion (182) of the main body (181), and a bottom surface of the pressing member (200) is in contact with a top surface of the thermal bonding portion (194a).

8. The fermentation container (12) according to any one of claims 1 to 7, comprising a recession (185) recessed downward from the main body (181) and having an outer circumference; and
wherein the connecting portion (192) has a hollow cylindrical shape and is connected to the main body (181) by being fitted on the outer circumference of the recession.

9. The fermentation container (12) according to any one of claims 1 to 8, wherein the bonding portion (193) extends radially outward from a lower end of the connecting portion (192); and
wherein the pressing member (200) has an annular shape pressing an outer circumference of the connecting portion (192) radially inwards.

10. The fermentation container (12) according to any one of claims 1 to 9, wherein the pressing member (200) has an elongated shape and comprises a locking portion (201) and a fitting portion (202) configured to receive the locking portion (201);
wherein the locking portion (201) and the fitting portion (202) are longitudinally spaced apart along the elongated shape; and wherein the pressing member (200) forms a locked annular shape when the locking portion (201) is received at the fitting portion (202).

11. The fermentation container (12) according to any one of claims 1 to 10, wherein the pressing member (200) extends radially outwards such that when the container portion (194b) expands outwardly with respect to the fermentation space (S2), a portion of an outer surface of the container portion (194b) adjacent to the thermal bonding portion (194b) comes in contact with a bottom surface of the pressing member (200).

12. A beverage maker including a fermentation container (12), wherein the fermentation container (12) is according to any one of claims 1 to 11.

13. The beverage maker according to claim 12, comprising:
a fermenter (110) having an internal space (S1) and an opening (170); and
a fermentation lid (107) configured to open and close the opening (170);
wherein the flexible container (194) of the fermentation container (12) is disposed in the internal space (S1).

14. The beverage maker according to claim 13,
wherein the seating portion (183) is seated at the opening (170) of the fermenter (110).

15. The beverage maker according to claim 13 or 14, wherein the fermentation lid (107) comprises a body (510) configured to press down the main body (182) of the fermentation container (12) to exert a force onto the pressing member (200) towards the bonding portion (193), when the fermentation lid (107) is positioned to close the opening (170) of the fermenter (110).

## Patentansprüche

1. Fermentationsbehälter (12) für eine Getränkeherstellungsvorrichtung, wobei der Behälter Folgendes umfasst:
einen Hauptkörper (181), der eine zentrale Achse (C) und einen Umfangsabschnitt (182) aufweist;
einen Verklebungsabschnitt (193), der von einer Bodenfläche des Umfangsabschnitts (182) des Hauptkörpers (181) vertikal beabstandet ist;
einen Verbindungsabschnitt (192), der konfiguriert ist, den Verklebungsabschnitt (193) und den Hauptkörper (181) zu verbinden; und
einen elastischen Behälter (194), der unter dem Umfangsabschnitt (182) des Hauptkörpers (181) angeordnet ist und einen Abschnitt (194a) zum thermischen Verkleben und einen Behälterabschnitt (194b) umfasst, wobei der Abschnitt (194a) zum thermischen Verkleben mit einer Oberfläche des Verklebungsabschnitts (193), die zum Umfangsabschnitt (182) des Hauptkörpers (181) zeigt, thermisch verklebt ist und wobei der Behälterabschnitt (194b) mit dem Abschnitt (194a) zum thermischen Verkleben verbunden ist und einen Fermentationsraum (S2) umfasst;
wobei der Fermentationsbehälter (12) eine Packung ist, in der Materialien zum Herstellen eines Getränks enthalten sind,
wobei die Materialien im Fermentationsraum (S2) enthalten sind; und
wobei der Fermentationsbehälter (12) ferner Folgendes umfasst:
ein Presselement (200), das ein elastisches Material umfasst und zwischen dem Umfangsabschnitt (182) des Hauptkörpers (181) und dem Abschnitt (194a) zum thermischen Verkleben eingesetzt ist, um den Abschnitt (194a) zum thermischen Verkleben gegen den Verklebungsabschnitt (193) zu pressen.

2. Fermentationsbehälter (12) nach Anspruch 1, wobei eine Lage (196) zum thermischen Verkleben zwischen dem Abschnitt (194a) zum thermischen Verkleben und der Oberfläche des Verklebungsabschnitts (193), die zum Umfangsabschnitt (182) des Hauptkörpers (181) zeigt, vorgesehen ist.

3. Fermentationsbehälter (12) nach Anspruch 1 oder 2, wobei die Oberfläche des Verklebungsabschnitts (193), die zum Umfangsabschnitt (182) des Hauptkörpers (181) zeigt, die Form einer ringförmigen Platte aufweist.

4. Fermentationsbehälter (12) nach einem der Ansprüche1 bis 3, der einen Aufnahmeabschnitt (183) zum Aufsetzen auf einen Fermenter (110) der Getränkeherstellungsvorrichtung umfasst, wobei der Aufnahmeabschnitt (183) am Umfangsabschnitt (182) des Hauptkörpers (181) radial auswärts ausgebildet ist und wobei der Aufnahmeabschnitt (183) vom Presselement (200) beabstandet ist.

5. Fermentationsbehälter (12) nach Anspruch 4, wobei ein Abstand (L3) von der zentralen Achse (C) des Hauptkörpers (181) zum Aufnahmeabschnitt (183) größer als ein Abstand (L2) von der zentralen Achse (C) des Hauptkörpers (181) zu einer seitlichen Außenumfangsfläche des Presselements (200) ist.

6. Fermentationsbehälter (12) nach einem der Ansprüche 1 bis 5, wobei ein Abstand (L2) einer seitlichen Außenumfangsfläche des Presselements (200) von der zentralen Achse (C) gleich einem Abstand (L1) einer Außenumfangsfläche des Verklebungsabschnitts (193) von der virtuellen zentralen Achse (C) oder größer ist.

7. Fermentationsbehälter (12) nach einem der Ansprüche 1 bis 6, wobei eine obere Oberfläche des Presselements (200) mit der Bodenfläche des Umfangsabschnitts (182) des Hauptkörpers (181) in Kontakt ist und wobei eine Bodenfläche des Presselements (200) mit einer oberen Oberfläche des Abschnitts (194a) zum thermischen Verkleben in Kontakt ist.

8. Fermentationsbehälter (12) nach einem der Ansprüche 1 bis 7, der eine Vertiefung (185) umfasst, die vom Hauptkörper (181) nach unten vertieft ist und einen Außenumfang aufweist; und
wobei der Verbindungsabschnitt (192) eine hohle zylindrische Form aufweist und mit dem Hauptkörper (181) verbunden ist, indem er am Außenumfang der Vertiefung eingesetzt wird.

9. Fermentationsbehälter (12) nach einem der Ansprüche 1 bis 8, wobei der Verklebungsabschnitt (193) von einem unteren Ende des Verbindungsabschnitts (192) radial auswärts verläuft; und
wobei das Presselement (200) eine Ringform aufweist, die einen Außenumfang des Verbindungsabschnitts (192) radial einwärts presst.

10. Fermentationsbehälter (12) nach einem der Ansprüche 1 bis 9, wobei das Presselement (200) eine längliche Form aufweist und einen Einrastabschnitt (201) und einen Einsetzabschnitt (202), der konfiguriert ist, den Einrastabschnitt (201) aufzunehmen, umfasst;
wobei der Einrastabschnitt (201) und der Einsetzabschnitt (202) längs der länglichen Form in Längsrichtung voneinander beabstandet sind; und wobei das Presselement (200) eine eingerastete Ringform bildet, wenn der Einrastabschnitt (201) im Einsetzabschnitt (202) aufgenommen ist.

11. Fermentationsbehälter (12) nach einem der Ansprüche 1 bis 10, wobei das Presselement (200) radial auswärts verläuft, so dass dann, wenn sich der Behälterabschnitt (194b) in Bezug auf den Fermentationsraum (S2) auswärts ausdehnt, ein Abschnitt einer äußeren Oberfläche des Behälterabschnitts (194b) angrenzend an den Abschnitt (194b) zum thermischen Verkleben mit einer Bodenfläche des Presselements (200) in Kontakt gelangt.

12. Getränkeherstellungsvorrichtung, die einen Fermentationsbehälter (12) umfasst, wobei der Fermentationsbehälter (12) ein Fermentationsbehälter nach einem der Ansprüche 1 bis 11 ist.

13. Getränkeherstellungsvorrichtung nach Anspruch 12, die Folgendes umfasst:
einen Fermenter (110), der einen Innenraum (S1) und eine Öffnung (170) aufweist; und
einen Fermentationsdeckel (107), der konfiguriert ist, die Öffnung (170) zu öffnen und zu schließen;
wobei der elastische Behälter (194) des Fermentationsbehälters (12) im Innenraum (S1) angeordnet ist.

14. Getränkeherstellungsvorrichtung nach Anspruch 13,
wobei der Aufnahmeabschnitt (183) auf der Öffnung (170) des Fermenters (110) sitzt.

15. Getränkeherstellungsvorrichtung nach Anspruch 13 oder 14, wobei der Fermentationsdeckel (107) einen Körper (510) umfasst, der konfiguriert ist, den Hauptkörper (182) des Fermentationsbehälters (12) herabzudrücken, um eine Kraft auf das Presselement (200) in Richtung des Verklebungsabschnitts (193) auszuüben, wenn der Fermentationsdeckel (107) so positioniert ist, dass er die Öffnung (170) des Fermenters (110) schließt.

## Revendications

1. Récipient de fermentation (12) pour un appareil de préparation de boisson, comportant
un corps principal (181) ayant un axe central (C) et une partie circonférentielle (182) ;
une partie d'assemblage (193) verticalement espacée d'une surface inférieure de la partie circonférentielle (182) du corps principal (181) ;
une partie de liaison (192) configurée pour relier la partie d'assemblage (193) et le corps principal (181) ; et
un contenant souple (194) disposé sous la partie circonférentielle (182) du corps principal (181) et incluant une partie d'assemblage thermique (194a) et une partie de contenant (194b), dans lequel la partie d'assemblage thermique (194a) est thermiquement assemblée à une surface de la partie de liaison (193) dirigée vers la partie circonférentielle (182) du corps principal (181), et dans lequel la partie de contenant (194b) est reliée à la partie d'assemblage thermique (194a) et inclut un espace de fermentation (S2) dans celle-ci ;
dans lequel le récipient de fermentation (12) est un ensemble dans lequel sont reçues des matières destinées à préparer une boisson,
dans lequel les matières sont reçues dans l'espace de fermentation (S2) ; et
dans lequel le récipient de fermentation (12) comporte en outre :
un élément de pression (200) comportant un matériau élastique et étant inséré entre la partie circonférentielle (182) du corps principal (181) et la partie d'assemblage thermique (194a) pour presser la partie d'assemblage thermique (194a) sur la partie d'assemblage (193).

2. Récipient de fermentation (12) selon la revendication 1, dans lequel une couche d'assemblage thermique (196) est agencée entre la partie d'assemblage thermique (194a) et la surface de la partie d'assemblage (193) dirigée vers la partie circonférentielle (182) du corps principal (181).

3. Récipient de fermentation (12) selon la revendication 1 ou 2, dans lequel la surface de la partie d'assemblage (193) dirigée vers la partie circonférentielle (182) du corps principal (181) a une forme de plaque annulaire.

4. Récipient de fermentation (12) selon l'une quelconque des revendications 1 à 3, comportant une partie d'appui (183) pour être en appui sur un fermenteur (110) de l'appareil de préparation de boisson, dans lequel la partie d'appui (183) est formée radialement vers l'extérieur de la partie circonférentielle (182) du corps principal (181) et dans lequel la partie d'appui (183) est espacée de l'élément de pression (200).

5. Récipient de fermentation (12) selon la revendication 4, dans lequel une distance (L3) de l'axe central (C) du corps principal (181) jusqu'à la partie d'appui (183) est plus grande qu'une distance (L2) de l'axe central (C) du corps principal (181) jusqu'à une surface latérale circonférentielle extérieure de l'élément de pression (200).

6. Récipient de fermentation (12) selon l'une quelconque des revendications 1 à 5, dans lequel une distance (L2) d'une surface latérale circonférentielle extérieure de l'élément de pression (200) par rapport à l'axe central (C) est égale ou supérieure à une distance (L1) d'une circonférence extérieure de la partie d'assemblage (193) par rapport à l'axe central (C) virtuel.

7. Récipient de fermentation (12) selon l'une quelconque des revendications 1 à 6, dans lequel une surface supérieure de l'élément de pression (200) est en contact avec la surface inférieure de la partie circonférentielle (182) du corps principal (181), et une surface inférieure de l'élément de pression (200) est en contact avec une surface supérieure de la partie d'assemblage thermique (194a).

8. Récipient de fermentation (12) selon l'une quelconque des revendications 1 à 7, comportant un évidement (185) évidé vers le bas à partir du corps principal (181) et ayant une circonférence extérieure ; et
dans lequel la partie de liaison (192) a une forme cylindrique creuse et est reliée au corps principal (181) en étant agencée sur la circonférence extérieure de l'évidement.

9. Récipient de fermentation (12) selon l'une quelconque des revendications 1 à 8, dans lequel la partie d'assemblage (193) s'étend radialement vers l'extérieur à partir d'une extrémité inférieure de la partie de liaison (192) ; et
dans lequel l'élément de pression (200) a une forme annulaire pressant une circonférence extérieure de la partie de liaison (192) radialement vers l'intérieur.

10. Récipient de fermentation (12) selon l'une quelconque des revendications 1 à 9, dans lequel l'élément de pression (200) a une forme allongée et comporte une partie de blocage (201) et une partie d'insertion (202) configurée pour recevoir la partie de blocage (201) ;
dans lequel la partie de blocage (201) et la partie d'insertion (202) sont longitudinalement espacées l'une de l'autre le long de la forme allongée ; et dans lequel l'élément de pression (200) forme une forme annulaire bloquée lorsque la partie de blocage (201) est reçue sur la partie d'insertion (202).

11. Récipient de fermentation (12) selon l'une quelconque des revendications 1 à 10, dans lequel l'élément de pression (200) s'étend radialement vers l'extérieur de telle sorte que lorsque la partie de contenant (194b) se détend vers l'extérieur par rapport à l'espace de fermentation (S2), une partie d'une surface extérieure de la partie de contenant (194b) adjacente à la partie d'assemblage thermique (194b) vient en contact avec une surface inférieure de l'élément de pression (200).

12. Appareil de préparation de boisson incluant un récipient de fermentation (12), dans lequel le récipient de fermentation (12) est selon l'une quelconque des revendications 1 à 11.

13. Appareil de préparation de boisson selon la revendication 12, comportant :
un fermenteur (110) ayant un espace interne (S1) et une ouverture (170) ; et
un couvercle de fermentation (107) configuré pour ouvrir et fermer l'ouverture (170) ;
dans lequel le contenant souple (194) du récipient de fermentation (12) est disposé dans l'espace interne (S1).

14. Appareil de préparation de boisson selon la revendication 13,
dans lequel la partie d'appui (183) est en appui sur l'ouverture (170) du fermenteur (110).

15. Appareil de préparation de boisson selon la revendication 13 ou 14, dans lequel le couvercle de fermentation (107) comporte un corps (510) configuré pour presser vers le bas le corps principal (182) du récipient de fermentation (12) pour exercer une force sur l'élément de pression (200) vers la partie d'assemblage (193), lorsque le couvercle de fermentation (107) est positionné pour fermer l'ouverture (170) du fermenteur (110).
